(19)

Europäisches
Patentamt

European
Patent Office

Office européen
des brevets

(11) **EP 2 505 249 B1**

(12) **EUROPEAN PATENT SPECIFICATION**

(45) Date of publication and mention
of the grant of the patent:
**23.10.2013  Bulletin 2013/43**

(51) Int Cl.:
***B01D 46/24*** (2006.01)

(21) Application number: **11187076.2**

(22) Date of filing: **28.10.2011**

(54) **Honeycomb structure and method of manufacturing honeycomb structure**

Wabenstruktur und Herstellungsverfahren für Wabenstruktur

Structure en nid d'abeille et procédé de fabrication de la structure en nid d'abeille

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2011  PCT/JP2011/057857**

(43) Date of publication of application:
**03.10.2012  Bulletin 2012/40**

(73) Proprietor: **Ibiden Co., Ltd.**
**Ogaki-shi**
**Gifu 503-8604 (JP)**

(72) Inventors:
• **Kunieda, Masafumi**
  **Gifu, 501-0695 (JP)**
• **Matsukawa, Yosuke**
  **Gifu, 501-0695 (JP)**

(74) Representative: **HOFFMANN EITLE**
**Patent- und Rechtsanwälte**
**Arabellastrasse 4**
**81925 München (DE)**

(56) References cited:
**EP-A1- 2 319 604     EP-A2- 2 130 591**
**EP-A2- 2 130 592     EP-A2- 2 130 597**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a honeycomb structure that treats exhaust gas and a method of manufacturing the honeycomb structure that treats exhaust gas.

2. Description of the Related Art

A large number of techniques have been developed in relation to conversion of automobile exhaust gas. With an increase in traffic, however, countermeasures taken against exhaust gas have hardly been satisfactory. Not only in Japan but also globally, is automobile emission control going to be further tightened.

In order to meet such control of exhaust gas, catalyst supports capable of treating predetermined toxic components contained in exhaust gas are used in exhaust gas converting systems. Further, a honeycomb structure is known as a member for such catalyst supports.

Common honeycomb structures have a honeycomb unit. This honeycomb unit has, for example, multiple cells (through holes) extending from one end face to another end face of the honeycomb unit along its longitudinal directions, and these cells are separated from each other by cell walls having a catalyst supported on their surfaces or cell walls formed of a catalyst. Accordingly, in the case of causing exhaust gas to flow through a honeycomb structure having such a honeycomb unit, substances contained in the exhaust gas, such as HC, CO, and/or NOx, are converted by the catalyst supported on the cell walls or the catalyst forming the cell walls, so that these toxic components in the exhaust gas may be treated.

In particular, in systems called SCR (Selective Catalytic Reduction) systems, it is possible to decompose NOx in exhaust gas into nitrogen and water using ammonia. For example, Patent Document 1 discloses a honeycomb structure having a honeycomb unit containing zeolite usable in SCR systems.

[Prior Art Document]

[Patent Document]

[Patent Document 1] International Publication Number WO 09/141878 pamphlet

With respect to the conventional honeycomb structure, however, not mere conversion of NOx and the like but further improvement in the rate of conversion of NOx and the like is desired.

SUMMARY OF THE INVENTION

The present invention has been made in view of such a problem, and has an object of providing a honeycomb structure improved in the rate of conversion of NOx and the like compared with the conventional honeycomb structure. Further, the present invention has an object of providing a method of manufacturing such a honeycomb structure.

According to the present invention, a honeycomb structure is provided that includes a honeycomb unit, the honeycomb unit containing zeolite and an inorganic binder and having a plurality of cells extending from a first end face to a second end face of the honeycomb unit along a longitudinal direction thereof and separated by a plurality of cell walls, where the honeycomb unit is manufactured by molding and firing raw material paste containing zeolite particles and the inorganic binder, the zeolite particles having a D50 of 3.6 $\mu$m or more, and an average pore size of the cell walls is more than or equal to 0.10 $\mu$m and less than or equal to 0.50 $\mu$m, and an average particle size of the cell walls is more than or equal to 3.6 $\mu$m and less than or equal to 7.0 $\mu$m.

Here, in the honeycomb structure according to the present invention, the D50 of the zeolite particles may be less than or equal to 7.0 $\mu$m.

Further, in the honeycomb structure according to the present invention, a weight ratio of the zeolite contained in the honeycomb unit may be more than or equal to 70 wt%.

Further, in the honeycomb structure according to the present invention, the zeolite may be ion-exchanged with iron.

Further, in the honeycomb structure according to the present invention, the honeycomb structure may include a plurality of the honeycomb units.

Further, according to the present invention, a method of manufacturing a honeycomb structure according to claim 6 is provided that includes the steps of (a) preparing raw material paste containing zeolite particles and the inorganic binder; (b) forming a honeycomb molded body by molding the raw material paste; and (c) obtaining the honeycomb unit by firing the honeycomb molded body, wherein the zeolite particles have a D50 of 3.6 $\mu$m or more.

Here, in the method of manufacturing a honeycomb structure according to the present invention, the D50 of the zeolite particles may be less than or equal to 7.0 $\mu$m.

Further, in the method of manufacturing a honeycomb structure according to the present invention, an average pore size of the honeycomb unit may be more than or equal to 0.10 $\mu$m and less than or equal to 0.50 $\mu$m.

Further, in the method of manufacturing a honeycomb structure according to the present invention, an average particle size of the honeycomb unit is more than or equal to 3.6 $\mu$m and less than or equal to 7.0 $\mu$m.

Further, in the method of manufacturing a honeycomb structure according to the present invention, the zeolite particles may be ion- exchanged with iron.

Here, the method of manufacturing a honeycomb structure according to the present invention may further include the step of (d) subjecting the zeolite contained in the honeycomb unit to ion exchange with iron.

Further, in the method of manufacturing a honeycomb structure according to the present invention, the raw material paste may further contain at least one of inorganic fibers and an organic binder.

Further, the method of manufacturing a honeycomb structure according to the present invention may further include the step of (e) joining a plurality of the honeycomb units by interposing an adhesive layer.

According to the present invention, it is possible to provide a honeycomb structure improved in the rate of conversion of NOx and the like compared with the conventional honeycomb structure. Further, it is possible to provide a method of manufacturing such a honeycomb structure.

BRIEF DESCRIPTION OF THE DRAWINGS

FIG. 1 is a schematic perspective view of a honeycomb structure according to the present invention.
FIG. 2 is a schematic perspective view of another honeycomb structure according to the present invention.
FIG. 3 is a schematic perspective view of a honeycomb unit that is a component of the honeycomb structure of FIG. 2.
FIG. 4 is a flowchart of a method of manufacturing a honeycomb structure according to the present invention.
FIG. 5 is a diagram illustrating measurement locations of the average particle size of honeycomb units of examples and comparative examples.

DETAILED DESCRIPTION OF THE PREFERRED EMBODIMENTS

A description is given below, with reference to the drawings, of features of the present invention.

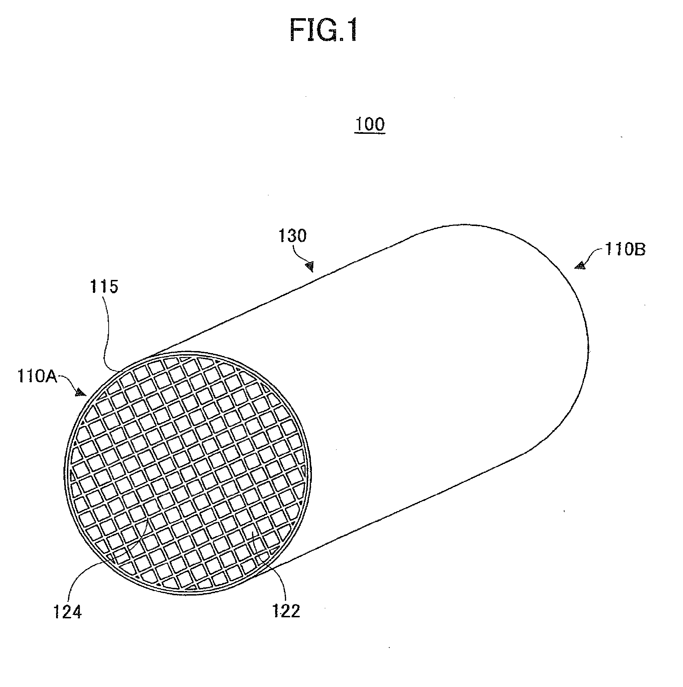

FIG. 1 schematically illustrates a honeycomb structure according to the present invention.

As illustrated in FIG. 1, a honeycomb structure 100 is formed of a single honeycomb unit 130 having two end faces 110A and 110B. The honeycomb structure 100 has an outer peripheral coat layer 115 formed on the side surface of the honeycomb unit 130 excluding the end faces 110A and 110B.

The honeycomb unit 130 includes multiple cells (through holes) 122, extending from one end to another end of the honeycomb unit 130 along its longitudinal directions and open at the end faces 110A and 110B, and cell walls 124 separating the cells 122. In the nonlimiting example of FIG. 1, the cross sections of the cells 122 perpendicular to their longitudinal directions (axial directions) are substantially square.

The honeycomb unit 130 is formed of, for example, inorganic particles and an inorganic binder.

Here, in the case of using alumina, silica, titania, ceria, zirconia, mullite, zeolite or the like as the inorganic particles included in a honeycomb unit 130, the honeycomb structure 100 having this honeycomb unit 130 may be used as a catalyst support for converting CO, HC, and/or NOx. In particular, a catalyst support that uses zeolite as inorganic particles may be used for a urea SCR system having a urea tank.

For example, in such a urea SCR system, when exhaust gas is caused to flow through the system, the urea contained in the urea tank reacts with water in the exhaust gas to generate ammonia (Eq. (1)):

$$CO(NH_2)_2 + H_2O \rightarrow 2NH_3 + CO_2. \qquad (1)$$

When this ammonia, together with exhaust gas including NOx, flows into each cell 122 from one end face of the honeycomb structure 100 (for example, the end face 110A of the honeycomb unit 130), the reactions of the following Eqs. (2- 1) and (2- 2) are caused by the action of the zeolite catalyst included in the cell walls 123:

$$4NH_3 + 4NO + O_2 \rightarrow 4N_2 + 6H_2O, \qquad (2\text{-}1)$$

$$8NH_3 + 6NO_2 \rightarrow 7N_2 + 12H_2O. \qquad (2\text{-}2)$$

Thereafter, the converted exhaust gas is discharged from another end face of the honeycomb structure 100 (for example, the end face 110B of the honeycomb unit 130). Thus, by causing exhaust gas to flow inside the honeycomb structure 100, NOx in the exhaust gas can be treated.

In the case of converting exhaust gas using the conventional honeycomb structure formed of a honeycomb unit containing zeolite, conversion of NOx and the like has not been sufficient. One reason for this is believed to be that when exhaust gas is caused to flow through the honeycomb structure, the exhaust gas does not flow sufficiently into pores in the cell walls of the honeycomb unit. However, even if an attempt is made to increase the pore size of pores in the cell walls of the honeycomb unit in order to address this problem, a specific pore size for producing a proper NOx conversion effect has been unknown. For example, excessively increasing the pore size of pores in the cell walls of the honeycomb unit in turn causes another problem in that NOx in the exhaust gas flows out of the honeycomb structure before being converted through catalyst reaction in the cell walls of the honeycomb unit.

On the other hand, in the honeycomb structure 100 according to the present invention, the average pore size of the cell walls 124 of the honeycomb unit 130 is more than or equal to 0.10 $\mu$m. If the average pore size is more than or equal to 0.10 $\mu$m, pores are large enough to allow NO molecules and the like in the exhaust gas into the pores even when the molecular motion of the NO molecules and the like intensifies at high temperatures, so that NOx in the exhaust gas is allowed to sufficiently enter the pores of the cell walls. This allows the honeycomb structure 100 according to the present invention to improve the NOx conversion rate compared with the conventional honeycomb structure.

Further, the average pore size of the cell walls 124 of the honeycomb unit 130 is less than or equal to 0.50 $\mu$m. If the average pore size exceeds 0.50 $\mu$m, large pores increase in number in the cell walls 124 so that the number of pores of the cell walls 124 is reduced. Therefore, NOx in the exhaust gas is less likely to enter the pores of the cell walls 124. Accordingly, it is impossible for such a honeycomb structure to improve the NOx conversion rate compared with the conventional honeycomb structure.

Further, the average pore size of the cell walls 124 of the honeycomb unit 130 is preferably 0.10 $\mu$m to 0.50 $\mu$m, more preferably 0.10 $\mu$m to 0.33 $\mu$m, and still more preferably, 0.12 $\mu$m to 0.33 $\mu$m.

In the honeycomb structure 100 according to the present invention, the average particle size of the cell walls 124 of the honeycomb unit 130 is more than or equal to 3.6 $\mu$m. If the average particle size of the cell walls 124 is less than 3.6 $\mu$m, it is difficult for the cell walls 124 to have an average pore size of 0.10 $\mu$m or more. Further, the average particle size of the cell walls 124 of the honeycomb unit 130 is less than or equal to 7.0 $\mu$m. If the average particle size of the cell walls 124 exceeds 7.0 $\mu$m, it is difficult for the cell walls 124 to have an average pore size of 0.50 $\mu$m or less.

The average pore size of the cell walls 124 of the honeycomb unit 130 may be measured by mercury intrusion porosimetry. The average particle size of the cell walls 124 of the honeycomb unit 130 may be determined by observing cross sections of the cell walls 124 in a direction perpendicular to the cells 122 by scanning electron microscopy (SEM) and measuring the diameters of particles in SEM images or SEM photographs.

[Configuration of Honeycomb Structure 100]

Here, a brief description is given of the honeycomb unit 130 included in the honeycomb structure 100 illustrated in FIG. 1. Here, a description is given in particular of a case where the honeycomb unit 130 is formed of a material including zeolite as a principal component.

The honeycomb unit 130 contains zeolite and an inorganic binder. The honeycomb unit 130 may further contain inorganic particles other than zeolite. The honeycomb unit 130 may further contain a strength reinforcing material such as inorganic fibers.

Examples of zeolite contained in the honeycomb unit 130 include $\beta$-zeolite, zeolite Y, ferrierite, zeolite ZSM-5, mordenite, faujasite, zeolite A, zeolite L, structural analogs of zeolite and the like. Zeolite is preferably $\beta$-zeolite or zeolite ZSM-5. Further, preferred structural analogs of zeolite are ALPO (aluminophosphate), SAPO (silico-aluminophosphate) and the like. Further, zeolite may have Fe, Cu, Ni, Co, Zn, Mn, Ti, Ag, V, etc., introduced therein through ion exchange. Of these elements, iron (Fe) or copper (Cu) is preferable in particular, of which iron (Fe) is more preferable.

In particular, if zeolite is ion-exchanged with iron (Fe), it is possible to improve the NOx conversion rate (the NOx conversion rate at high temperatures in particular).

The inorganic binder contained in the Honeycomb unit 130 is desirably a solids content of at least one selected from the group consisting of alumina sol, silica sol, titania sol, water glass, sepiolite, attapulgite, and boehmite.

The inorganic particles other than those of zeolite are preferably of alumina, silica, zirconia, titania, ceria, mullite, etc. These inorganic particles other than those of zeolite may be used alone or in combination.

Of the amount of zeolite contained in the honeycomb unit 130, the lower limit is preferably 70 wt% and more preferably 75 wt%, while the upper limit is preferably 90 wt% and more preferably 85 wt%.

If the amount of zeolite contained in the honeycomb unit 130 is less than 70 wt%, the NOx conversion rate is reduced. If the amount of zeolite contained in the honeycomb unit 130 exceeds 90 wt%, the amount of the inorganic binder contained in the honeycomb unit 130 is relatively reduced, so that the strength of the honeycomb unit 130 is reduced.

Further, in the case of adding inorganic fibers to the honeycomb unit 130, alumina, silica, silicon carbide, silica-alumina, glass, potassium titanate, aluminum borate or the like is desirable as the inorganic fibers. These may be used alone or in combination. Of the above-described inorganic fibers, alumina is more preferable.

The cell density of the honeycomb unit 130 is preferably in the range of 15.5-186 cells/cm² (100-1200 cpsi), more preferably in the range of 46.5-170 cells/cm² (300-1100 cpsi), and still more preferably in the range of 62-155 cells/cm² (400-1000 cpsi).

The thickness of the cell walls 124 of the honeycomb unit 130 is not limited in particular, but has a preferable lower limit of 0.1 mm in terms of the strength of the honeycomb unit 130 and has a preferable upper limit of 0.4 mm in terms of exhaust gas conversion performance.

The porosity of the honeycomb unit 130 is preferably in the range of 30% to 70%. If the porosity of the honeycomb unit 130 is less than 30%, NOx in the exhaust gas is less likely to enter the pores of the cell walls 124, so that the NOx conversion rate is reduced. If the porosity of the honeycomb unit 130 exceeds 70%, the amount of zeolite is relatively reduced, so that the NOx conversion rate is reduced. The value of the porosity of the honeycomb unit 130 means a value measured by a weighing method.

The honeycomb unit 130 forming the honeycomb structure 100 of the present invention is manufactured by molding and firing raw material paste containing zeolite particles whose D50 is more than or equal to 3.6 $\mu$m and an inorganic binder. Further, the D50 of the zeolite particles contained in the honeycomb unit 130 is preferably less than or equal to 7.0 $\mu$m.

Further, the D50 of the zeolite particles contained in the honeycomb unit 130 is more preferably 3.6 $\mu$m to 7.0 $\mu$m, and still more preferably, 3.6 $\mu$m to 4.5 $\mu$m.

Manufacturing the honeycomb unit 130 using zeolite particles whose D50 is 3.6 $\mu$m or more as the zeolite particles contained in the honeycomb unit 130 makes it possible for the cell walls 124 of the honeycomb unit 130 to have an average pore size of 0.10 $\mu$m or more. This allows NOx in the exhaust gas to penetrate sufficiently into the pores of the cell walls 124, thus making it possible to improve the NOx conversion rate of the honeycomb structure 100 compared with that of the conventional honeycomb structure.

Further, manufacturing the honeycomb unit 130 using zeolite particles whose D50 is 7.0 $\mu$m or less as the zeolite particles contained in the honeycomb unit 130 makes it possible for the cell walls 124 of the honeycomb unit 130 to have an average pore size of 0.50 $\mu$m or less. This reduces the number of large pores in the cell walls 124, so that the number of pores of the cell walls 124 increases. As a result, NOx in the exhaust gas is likely to enter the pores, thus making it possible to improve the NOx conversion rate of the honeycomb structure 100 compared with that of the conventional honeycomb structure.

Here, the "D50" means a particle size value at which the particle size distribution of secondary particles is 50 wt% in terms of volume, and is also referred to as "median diameter." The D50 of the zeolite particles may be measured using a laser diffraction particle size analyzer (for example, SALD- 2200, manufactured by Shimadzu Corporation) .

[Other Configuration of Honeycomb Structure]

The honeycomb structure 100 illustrated in FIG. 1 is a so-called "monolithic" type formed of a single honeycomb unit. However, the present invention may also be applied to a honeycomb structure of a so-called "aggregated" type formed of multiple honeycomb units.

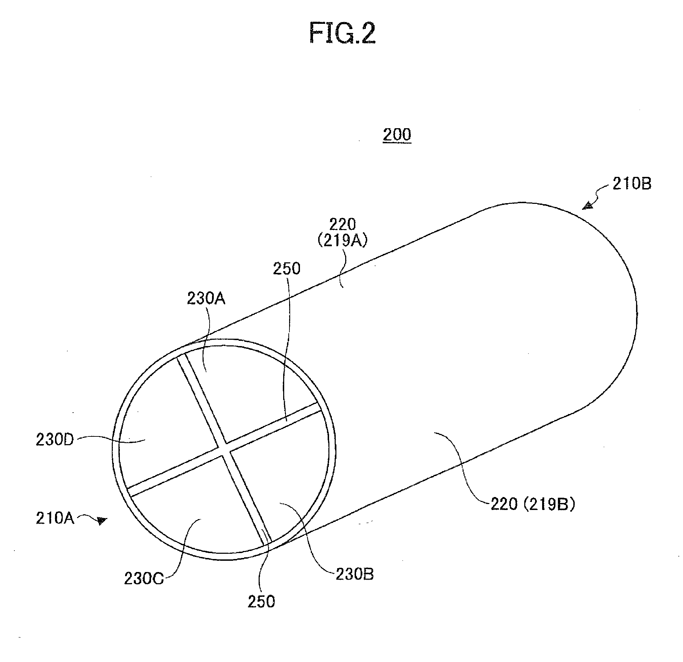

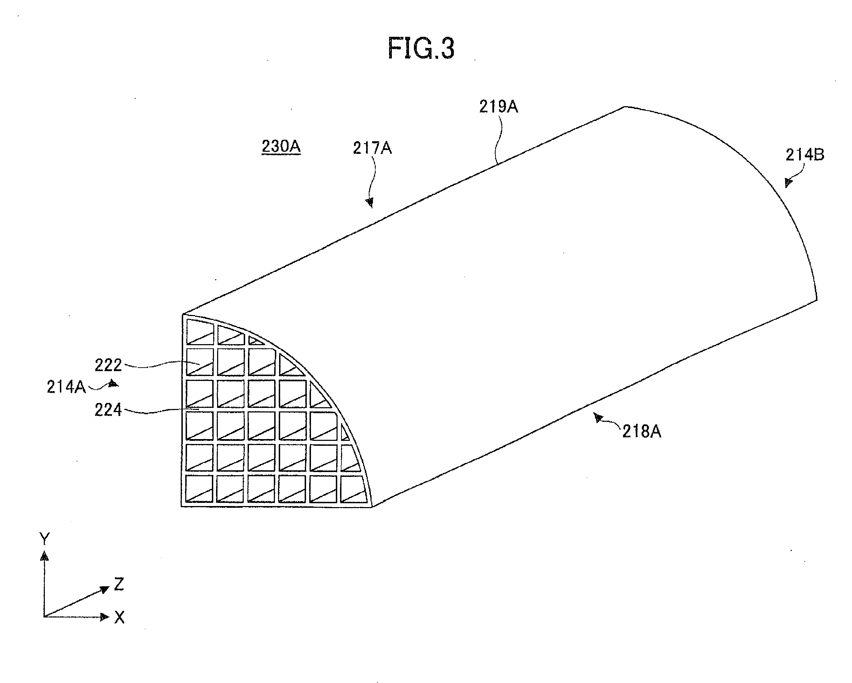

FIG. 2 is a schematic perspective view of another honeycomb structure according to the present invention. FIG. 3 is a perspective view of a honeycomb unit that is a component of the honeycomb structure of FIG. 2.

FIG. 2 illustrates a honeycomb structure 200 of an "aggregate" type according to the present invention. FIG. 3 illustrates a honeycomb unit 230A, which is a component of the honeycomb structure 200 illustrated in FIG. 2.

As illustrated in FIG. 2, the honeycomb structure 200 of the present invention has two open end faces 210A and 210B and a side surface 220. The honeycomb structure 200 includes an outer peripheral coat layer (not graphically illustrated) that defines the side surface 220.

The honeycomb structure 200 is formed by joining multiple honeycomb units by interposing an adhesive layer 250. For example, in the case of FIG. 2, the honeycomb structure 200 is formed of four honeycomb units, that is, honeycomb units 230A through 230D.

These honeycomb units 230A through 230D contain zeolite and an inorganic binder.

As illustrated in FIG. 3, the honeycomb unit 230A has a pillar structure having end faces 214A and 214B having a sectorial shape of a quarter circle and three sides 21"7A, 218A, and 219A. Of these, the side 217A and the side 218A have a flat surface, and the side 219A has a curved surface (hereinafter referred to as "curved side").

In the case of FIG. 2, the honeycomb units 230B through 230D have the same shape as the honeycomb unit 230A. For example, as illustrated in FIG. 2, the honeycomb unit 230B has a curved side 219B, which corresponds to the curved side 219A of the honeycomb unit 230A.

The honeycomb unit 230A includes multiple cells (through holes) 222, extending from the end face 214A to the end face 214B along the longitudinal directions of the honeycomb unit 230A and open at the end faces 214A and 214B, and cell walls 224 separating the cells 222. A catalyst such as zeolite may be supported on the cell walls 224.

Here, the average pore size of the cell walls 224 is more than or equal to 0.10 $\mu$m. Further, the average pore size of the cell walls 224 may be less than or equal to 0.50 $\mu$m.

It is clear to a person having ordinary skill in the art that the effects according to the present invention as described above are also produced by the honeycomb structure 200 having the honeycomb units 230A through 230D.

[Method of Manufacturing Honeycomb Structure According to Present Invention]

A description is given in detail below of a method of manufacturing the honeycomb structure 100 formed of a single honeycomb unit illustrated in FIG. 1 according to the present invention.

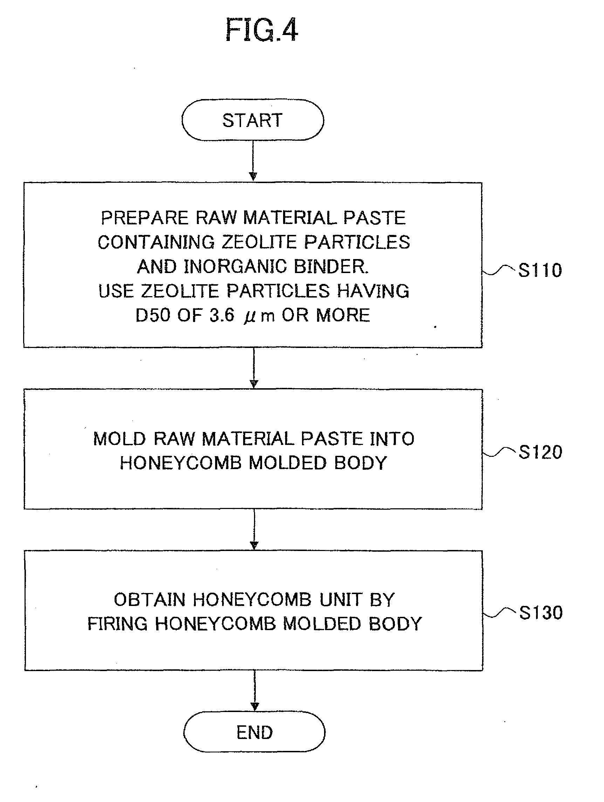

FIG. 4 is a flowchart illustrating a method of manufacturing a honeycomb structure according to the present invention. As illustrated in FIG. 4, the method of manufacturing a honeycomb structure according to the present invention includes:

(a) the process of preparing raw material paste containing zeolite particles and an inorganic binder, where zeolite particles having a D50 of 3.6 $\mu$m or more are used (step S110);
(b) the process of forming a honeycomb molded body by molding the raw material paste (step S120); and
(c) the process of obtaining a honeycomb unit by firing the honeycomb molded body (step S130).

A description is given below of each of the processes.

[Step S110]

First, raw material paste containing zeolite particles and an inorganic binder is prepared. The raw material paste may further contain inorganic particles other than those of zeolite and/or an organic binder. The raw material paste may further contain inorganic fibers. The raw material paste may further contain a dispersion medium such as water and/or a molding aid.

As the zeolite particles, those having a D50 of 3.6 $\mu$m or more are used. The D50 of the zeolite particles is preferably less than or equal to 7.0 $\mu$m. Here, the "D50" means a particle size value at which the particle size distribution of secondary particles is 50 wt% in terms of volume.

Using zeolite particles having a D50 of 3.6 $\mu$m or more makes it possible for the cell walls of a honeycomb unit to be finally obtained to have an average pore size of 0.10 $\mu$m or more, thus allowing NOx in the exhaust gas to penetrate sufficiently into the pores of the cell walls 124. Further, if the zeolite particles have a D50 of 7.0 $\mu$m or less, it is possible for the cell walls of the honeycomb unit to be finally obtained to have an average pore size of 0.50 $\mu$m or less. This prevents large pores in the cell walls from increasing in number. Therefore, it is possible to increase the number of pores of the cell walls, so that NOx in the exhaust gas is likely to enter the pores. This allows the NOx conversion rate of the honeycomb structure to be better than it has been.

The D50 of the zeolite particles is preferably in the range of 3.6 $\mu$m to 7.0 $\mu$m, more preferably in the range of 3.6 $\mu$m to 4.5 $\mu$m, and still more preferably, in the range of 3.7 $\mu$m to 4.5 $\mu$m. Further, the average pore size of the cell walls of the honeycomb unit is preferably in the range of 0.10 $\mu$m to 0.50 $\mu$m, more preferably in the range of 0.10 $\mu$m to 0.33 $\mu$m, and still more preferably, in the range of 0.12 $\mu$m to 0.33 $\mu$m.

The inorganic binder contained in the raw material paste may be at least one selected from the group consisting of, for example, alumina sol, silica sol, titania sol, water glass, sepiolite, attapulgite, boehmite, etc.

The inorganic particles other than those of zeolite contained in the raw material paste are preferably of alumina, silica, zirconia, titania, ceria, mullite or the like. These inorganic particles other than those of zeolite may be used alone or in combination.

The inorganic binder contained in the raw material paste is not limited to but may be one or more selected from, for example, methylcellulose, carboxymethylcellulose, hydroxyethylcellulose, polyethylene glycol, phenolic resin, epoxy resin, etc.

The inorganic fibers contained in the raw material paste are preferably alumina, silica, silicon carbide, silica-alumina, glass, potassium titanate, aluminum borate or the like. These may be used alone or in combination. Of the above-described inorganic fibers, alumina is more preferable.

The dispersion medium contained in the raw material paste is not limited in particular, and may be, for example, water, an organic solvent (such as benzene), alcohol (such as methanol), etc.

The molding aid contained in the raw material paste is not limited in particular, and may be, for example, ethylene glycol, dextrin, a fatty acid, fatty acid soap, polyalcohol, etc., of which two or more may be mixed. Of these, a fatty acid is desirable. Further, the fatty acid is preferably an unsaturated fatty acid, and more preferably a higher fatty acid. The higher fatty acid preferably has a carbon number more than or equal to 15 and less than 65.

The raw material paste is not limited to this, and is preferably subjected to mixing and kneading. For example, the raw material paste may be mixed using a mixer, an attritor, etc., and may be well kneaded with a kneader, etc.

Of the amount of zeolite contained in the raw material paste, the lower limit is preferably 70 wt% and more preferably 75 wt%, while the upper limit is preferably 90 wt% and more preferably 85 wt%. The NOx conversion rate of a manufactured honeycomb structure is higher with the amount of zeolite contained in the raw material paste in the range of 70 wt% to 90 wt%.

[Step S120]

Next, a honeycomb molded body is formed by molding the raw material paste prepared in step S110.

The method of molding the raw material paste is not limited in particular. For example, extrusion molding or the like may be used as a molding technique.

[Step S130]

Next, the honeycomb molded body obtained in the previous process is fired, so that a honeycomb unit (a honeycomb fired body) is manufactured.

The conditions for firing differ depending on the kind of the inorganic particles contained in the honeycomb molded body. The firing temperature is preferably in the range of, for example, 600 °C to 1200 °C.

If the firing temperature is less than 600 °C, condensation polymerization through the inorganic binder is prevented from progressing so that the strength of the honeycomb unit is reduced. On the other hand, if the firing temperature exceeds 1200 °C, the sintering of the zeolite particles excessively progresses so that the reaction sites of the zeolite particles are reduced.

An outer peripheral coat layer is formed on the side surface of the honeycomb unit excluding the end faces.

It is possible to manufacture a honeycomb structure as illustrated in FIG. 1 through the above-described processes.

The zeolite particles contained in the raw material paste may be of β-zeolite, zeolite Y, ferrierite, zeolite ZSM-5, mordenite, faujasite, zeolite A, zeolite L, a structural analog of zeolite, etc. Further, the zeolite particles contained in the raw material paste or zeolite in the honeycomb unit may be ion-exchanged with Fe, Cu, Ni, Co, Zn, Mn, Ti, Ag, V, etc. Of these elements, iron (Fe) and copper (Cu) are preferable in particular, of which iron (Fe) is more preferable for the ion exchange.

The method of subjecting zeolite to ion exchange includes a method using ion-exchanged zeolite particles (particularly zeolite ion-exchanged with iron [Fe]). Further, the honeycomb unit (honeycomb fired body) and the honeycomb structure may be manufactured using zeolite particles that are not ion-exchanged, and the process of subjecting zeolite contained in the honeycomb unit or the honeycomb structure to ion exchange (particularly to ion exchange with iron [Fe] by immersing the honeycomb unit or the honeycomb structure in a solution containing iron [Fe] ions) may be performed. That is, more preferably, the method of manufacturing a honeycomb structure according to the present invention further includes (d) the process of subjecting zeolite contained in the honeycomb unit or the honeycomb structure to ion exchange with iron after the processes of (a) through (c). An aqueous ferric nitrate solution or the like may be used as the solution containing iron (Fe) ions.

[Method of Manufacturing Honeycomb Structure Having Different Structure]

In the case of manufacturing a honeycomb structure formed of multiple honeycomb units as illustrated in FIG. 2, multiple honeycomb units manufactured through the above-described processes are  joined by interposing adhesive layer paste.

The adhesive layer paste is not limited in particular, and may be, for example, a mixture of inorganic particles and an inorganic binder, a mixture of an inorganic binder and inorganic fibers, a mixture of inorganic particles, an inorganic binder, and inorganic fibers, etc. An organic binder may further be added to the adhesive layer paste.

The organic binder contained in the adhesive layer paste is not limited in particular, and may be one or more selected from, for example, polyvinyl alcohol, methylcellulose, ethylcellulose, carboxymethylcellulose, etc. Among organic binders, carboxymethylcellulose is preferable.

A honeycomb unit assembly is formed by joining a necessary number of honeycomb units by interposing the adhesive layer paste and drying and solidifying the adhesive layer paste. Thereafter, if necessary, the outer peripheral surface of the obtained honeycomb unit assembly may be cut, for example, cylindrically using a diamond cutter or the like. As a result, a honeycomb structure of a desired shape is manufactured. Alternatively, as the honeycomb unit 230A illustrated in FIG. 3, the honeycomb units may have their shapes so determined in advance as to exactly form the end faces and the side surface of the honeycomb structure when joined. In the case of thus using honeycomb units of predetermined shapes, there is no need to process the outer peripheral surface after joining the individual honeycomb units.

The honeycomb unit assembly thus obtained has an outer peripheral coat layer formed on its outer peripheral surface excluding the end faces.

It is possible to manufacture a honeycomb structure having an aggregated structure as illustrated in FIG. 2 through the above-described processes.

In the honeycomb structure 100 or the honeycomb structure 200 described above, an outer peripheral coat layer may be or may not be formed on the side surface excluding the end faces. The outer peripheral coat layer is formed by drying and solidifying outer peripheral coat layer paste (the same as the adhesive layer paste described below).

[Examples]

A description is given in detail below of the present invention based on examples.

Honeycomb units were manufactured through the following processes, and the conversion performance of the honeycomb units was evaluated.

[Example 1]

First, raw material paste for a honeycomb molded body was prepared by mixing 2800 parts by weight of $\beta$-zeolite particles having an average particle size of secondary particles of 3 $\mu$m (having a D50 of 3.7 $\mu$m), 270 parts by weight of alumina fibers (6 $\mu$m in average fiber diameter and 100 $\mu$m in average fiber length), 1120 parts by weight of boehmite powder (a mixture of 72 mass% of a solids content and 28 mass% of an acetic acid and water), 380 parts by weight of an organic binder (methylcellulose), 310 parts by weight of a lubricant, and 2400 parts by weight of ion-exchanged water as raw materials.

Next, extrusion molding was performed with an extruder using this raw material paste, thereby obtaining a cylindrical honeycomb molded body having a size of 30 mm in diameter and 50 mm in length.

Next, the honeycomb molded body was sufficiently dried using a microwave drying apparatus and a hot air drying apparatus, and was degreased, being held at 400 °C for 2 hours. Thereafter, the honeycomb molded body was fired, being held at 700 °C for 2 hours, so that a honeycomb unit was obtained.

The honeycomb unit has an average pore size of 0.12 $\mu$m, an average particle size of 3.7 $\mu$m, and a porosity of 55%. The honeycomb unit has a cell wall thickness of 11 mil and a cell density of 420 cpsi.

This is referred to as a honeycomb unit according to Example 1.

In Example 1, as the $\beta$-zeolite particles contained in the raw material, those ion-exchanged with iron (Fe) were used. That is, the $\beta$-zeolite particles contained in the raw material were subjected to ionexchange with iron (Fe) by immersing $\beta$-zeolite particles in an aqueous ferric nitrate solution.

The amount of ion exchange with iron (Fe) of the $\beta$-zeolite was measured by ICP emission spectrometry using an ICPS-8100 (manufactured by Shimadzu Corporation) to be 3.6 mass%.

The D50 of the zeolite particles was measured using a laser diffraction particle size analyzer (SALD- 2200, manufactured by Shimadzu Corporation) . Further, the average pore size of the honeycomb unit was measured by mercury intrusion porosimetry (with a mercury porosimeter) . The cell wall thickness was determined from SEM observations (SEM photographs) of cross sections of cell walls in a direction perpendicular to the cells.

Further, the average particle size of the honeycomb unit was measured from the results of SEM observations at predetermined points of the honeycomb unit.

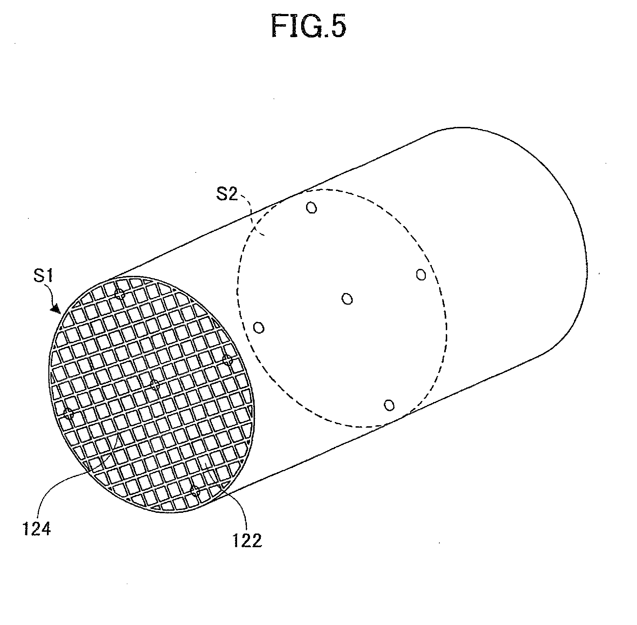

FIG. 5 illustrates measurement locations of the average particle size of the honeycomb unit. The points indicated by circles in FIG. 5 are measurement locations of the average particle size.

The ten points in the honeycomb unit illustrated in FIG. 5, that is, five points in one end face S1 of the honeycomb unit and five points in a cross section S2 perpendicular to a longitudinal direction of the honeycomb unit at the center of the honeycomb unit in the longitudinal direction (at the position equally distant from both end faces), were selected as measurement locations of the average particle size.

The five measurement positions in the end face S1 were one cell wall 124 in the substantial center part in the plane and four cell walls 124 substantially symmetrically arranged in crisscross directions (at a distance of approximately 10 mm from the peripheral edge of the end face S1). The same is the case with the five measurement positions in the cross section S2.

At each point, an SEM photograph of a cell wall end face or cross section was taken, and the particle size was measured with respect to five zeolite particles per measurement point. The average of the obtained particle size data of the total of 50 zeolite particles was determined as the average particle size of the honeycomb unit.

In measuring the particle size of zeolite, zeolite particles of appropriate size were selected from the SEM photographs. Further, since zeolite particles are coupled to each other, an outline supposed to be one zeolite particle was created, and a maximum length passing through the center was determined as the particle size of the particle.

[Example 2]

A honeycomb unit according to Example 2 was manufactured in the same manner as in Example 1. In

Example 2, however, zeolite particles having a D50 of 4.2 $\mu$m were used. Therefore, the obtained honeycomb unit had an average pore size of 0.20 $\mu$m, an average particle size of 4.2 $\mu$m, and a porosity of 55%.

[Example 3]

A honeycomb unit according to Example 3 was manufactured in the same manner as in Example 1. In Example 3, however, zeolite particles having a D50 of 4.5 $\mu$m were used. Therefore, the obtained honeycomb unit had an average pore size of 0.33 $\mu$m, an average particle size of 4.5 $\mu$m, and a porosity of 55%.

[Example 4]

A honeycomb unit according to Example 4 was manufactured in the same manner as in Example 1. In Example 4, however, zeolite particles having a D50 of 3.6 $\mu$m were used. Therefore, the obtained honeycomb unit had an average pore size of 0.10 $\mu$m, an average particle size of 3.6 $\mu$m, and a porosity of 55%.

[Comparative Example 1]

A honeycomb unit according to Comparative Example 1 was manufactured in the same manner as in Example 1. In Comparative Example 1, however, zeolite particles having a D50 of 3.5 $\mu$m were used. Therefore, the obtained honeycomb unit had an average pore size of 0.08 $\mu$m, an average particle size of 3.5 $\mu$m, and a porosity of 55%.

[Comparative Example 2]

A honeycomb unit according to Comparative Example 2 was manufactured in the same manner as in Example 1. In Comparative Example 2, however, zeolite particles having a D50 of 2.5 $\mu$m were used. Therefore, the obtained honeycomb unit had an average pore size of 0.04 $\mu$m, an average particle size of 2.5 $\mu$m, and a porosity of 55%.

The D50 of the raw material zeolite particles used in manufacturing each honeycomb unit, the average pore size of each honeycomb unit obtained, and the average particle size of each honeycomb unit obtained are illustrated together in Table 1.

Table 1

| | D50 OF RAW MATERIAL ZEOLITE ($\mu$m) | AVERAGE PORE SIZE OF HONEYCOMB UNIT ($\mu$m) | AVERAGE PARTICLE SIZE OF HONEYCOMB UNIT ($\mu$m) | NOx CONVERSION RATE (%) |
|---|---|---|---|---|
| **EXAMPLE 1** | 3.7 | 0.12 | 3.7 | 80 |
| **EXAMPLE 2** | 4.2 | 0.20 | 4.2 | 82 |
| **EXAMPLE 3** | 4.5 | 0.33 | 4.5 | 80 |
| **EXAMPLE 4** | 3.6 | 0.10 | 3.6 | 78 |
| **COMPARATIVE EXAMPLE 1** | 3.5 | 0.08 | 3.5 | 65 |
| **COMPARATIVE EXAMPLE 2** | 2.5 | 0.04 | 2.5 | 58 |

[Evaluation of Conversion Performance]

The conversion performance of the honeycomb units was evaluated as follows.

First, gas fed from a simulated exhaust gas generator (SIGU- 2000, manufactured by HORIBA, Ltd.) was caused to flow through each of the honeycomb units of Examples 1 to 4 and Comparative Examples 1 and 2 with one end face and another end face of each of the honeycomb units serving a gas entrance side and a gas exit side, respectively.

After a steady state was reached, a NOx concentration "C1" in the fed gas before introduction into the honeycomb unit and a NOx concentration "C2" in the gas discharged from the honeycomb unit were measured with a NOx measuring apparatus (MEXA- 6000FX, manufactured by HORIBA, Ltd.) with respect to each of the honeycomb units.

The NOx conversion rates of the honeycomb units of Examples 1 to 4 and Comparative Examples 1 and 2 were calculated from the obtained results of the NOx concentration measurement using Eq. (3) as follows:

$$\text{NOx conversion rate (\%)} = (C1 - C2)/(C1) \times 100. \tag{3}$$

The feed rate of the fed gas was 140,000 in space velocity (SV). The fed gas was based on nitrogen gas and contained $NO_2$ gas, NOx gas, and $NH_3$ gas. The $NO_2$ to NOx ratio of the fed gas was $NO_2/NOx = 0.25$, and the $NH_3$ to NOx ratio of the fed gas was $NH_3/NOx = 1$.

The test temperature of the evaluation of conversion performance was 500 °C.

The NOx conversion rates obtained in the honeycomb units are illustrated together in Table 1 shown above. Table 1 shows that the NOx conversion rates of the honeycomb units according to Example 1 through Example 4 are 80%, 82%, 80%, and 78%, respectively, showing that all of the NOx conversion rates are 75% or more and good conversion performance (NOx conversion rates) is obtained. On the other hand, the honeycomb units according to Comparative Example 1 and Comparative Example 2, whose NOx conversion rates are 65% and 58%, respectively, were low in conversion performance (NOx conversion rate).

It has been confirmed that by thus causing the D50 of zeolite particles to be 3.6 $\mu$m or more, the conversion performance (NOx conversion rate) is significantly improved. (In Example 1 through Example 4, the D50 is in the range of 3.6 $\mu$m to 4.5 $\mu$m, and the average pore size of the honeycomb unit is in the range of 0.10 $\mu$m to 0.33 $\mu$m.)

In Examples 1 through 4 and Comparative Examples 1 and 2, the NOx conversion rate was evaluated using a honeycomb unit of 30 mm in diameter and 50 mm in length. However, the same results of NOx conversion rate measurement as in Examples 1 through 4 and Comparative Examples 1 and 2 are believed to be obtained in larger-size honeycomb structures (the honeycomb structures 100 and 200) manufactured in the same manner as in Examples 1 through 4 and Comparative Examples 1 and 2.

**Claims**

1. A honeycomb structure including a honeycomb unit, the honeycomb unit containing zeolite and an inorganic binder and having a plurality of cells extending from a first end face to a second end face of the honeycomb unit along a longitudinal direction thereof and separated by a plurality of cell walls, **characterized in that**:

   the honeycomb unit is manufactured by molding and firing raw material paste containing zeolite particles and the inorganic binder, the zeolite particles having a D50 of 3.6 $\mu$m or more, and
   an average pore size of the cell walls is more than or equal to 0.10 $\mu$m and less than or equal to 0.50 $\mu$m, and
   an average particle size of the cell walls is more than or equal to 3.6 $\mu$m and less than or equal to 7.0 $\mu$m.

2. The honeycomb structure as claimed in claim 1, **characterized in that** the D50 of the zeolite particles is less than or equal to 7.0 $\mu$m.

3. The honeycomb structure as claimed in claim 1 or 2, **characterized in that** a weight ratio of the zeolite contained in the honeycomb unit is more than or equal to 70 wt%.

4. The honeycomb structure as claimed in any of claims 1 to 3, **characterized in that** the zeolite is ion-exchanged with iron.

5. The honeycomb structure as claimed in any of claims 1 to 4, **characterized in that** the honeycomb structure includes a plurality of the honeycomb units.

**6.** A method of manufacturing a honeycomb structure including a honeycomb unit, the honeycomb unit containing zeolite and an inorganic binder and having a plurality of cells extending from a first end face to a second end face of the honeycomb unit along a longitudinal direction thereof and separated by a plurality of cell walls, the method **characterized by** the steps of:

> (a) preparing raw material paste containing zeolite particles and the inorganic binder;
> (b) forming a honeycomb molded body by molding the raw material paste; and
> (c) obtaining the honeycomb unit by firing the honeycomb molded body,

wherein the zeolite particles have a D50 of 3.6 $\mu$m or more, and an average pore size of the honeycomb unit is more than or equal to 0.10 $\mu$m and less than or equal to 0.50 $\mu$m, an average particle size of the honeycomb unit is more than or equal to 3.6 $\mu$m and less than or equal to 7.0 $\mu$m.

**7.** The method of manufacturing a honeycomb structure as claimed in claim 6, **characterized in that** the D50 of the zeolite particles is less than or equal to 7.0 $\mu$m.

**8.** The method of manufacturing a honeycomb structure as claimed in any of claims 6 or 7, **characterized in that** the zeolite particles are ion-exchanged with iron.

**9.** The method of manufacturing a honeycomb structure as claimed in any of claims 6 or 7, further **characterized by** the step of:

> (d) subjecting the zeolite contained in the honeycomb unit to ion exchange with iron.

**10.** The method of manufacturing a honeycomb structure as claimed in any of claims 6 to 9, **characterized in that** the raw material paste further contains at least one of inorganic fibers and an organic binder.

**11.** The method of manufacturing a honeycomb structure as claimed in any of claims 6 to 10, further **characterized by** the step of:

> (e) joining a plurality of the honeycomb units by interposing an adhesive layer.

**Patentansprüche**

**1.** Wabenstruktur mit einer Wabeneinheit, die Zeolith und ein anorganisches Bindemittel und mehrere Zellen aufweist, die sich von einer ersten Endfläche zu einer zweiten Endfläche der Wabeneinheit entlang einer Längsrichtung davon erstrecken und durch mehrere Zellwände getrennt sind, **dadurch gekennzeichnet, dass**:

> die Wabeneinheit durch Formen und Brennen einer Rohmaterialpaste hergestellt ist, die Zeolithteilchen und das anorganische Bindemittel aufweist, wobei die Zeolithteilchen einen D50 von 3,6 $\mu$m oder mehr aufweisen, und
> eine mittlere Porengröße der Zellwände mehr als oder gleich 0,10 $\mu$m und weniger als oder gleich 0,5 $\mu$m beträgt und eine mittlere Teilchengröße der Zellwände mehr als oder gleich 3,6 $\mu$m und weniger als oder gleich 7,0 $\mu$m beträgt.

**2.** Wabenstruktur nach Anspruch 1, **dadurch gekennzeichnet, dass** der D50 der Zeolithteilchen weniger als oder gleich 7,0 $\mu$m beträgt.

**3.** Wabenstruktur nach Anspruch 1 oder 2, **dadurch gekennzeichnet, dass** ein Gewichtsverhältnis des Zeolith, der in der Wabeneinheit enthalten ist, mehr als oder gleich 70 Gewichtsprozent beträgt.

**4.** Wabenstruktur nach einem der Ansprüche 1 bis 3, **dadurch gekennzeichnet, dass** der Zeolith Ionen-ausgetauscht mit Eisen ist.

**5.** Wabenstruktur nach einem der Ansprüche 1 bis 4, **dadurch gekennzeichnet, dass** die Wabenstruktur mehrere Wabeneinheiten aufweist.

6. Verfahren zum Herstellen einer Wabenstruktur mit einer Wabeneinheit, die Zeolith und ein anorganisches Bindemittel und mehrere Zellen aufweist, die sich von einer ersten Endfläche zu einer zweiten Endfläche der Wabeneinheit entlang einer Längsrichtung davon erstrecken und durch mehrere Zellwände getrennt sind, wobei das Verfahren durch die folgenden Schritte gekennzeichnet ist:

   (a) Vorbereiten einer Rohmaterialpaste, die Zeolithteilchen und das anorganische Bindemittel aufweist;
   (b) Ausbilden eines wabengeformten Körpers durch Formen der Rohmaterialpaste; und
   (c) Erhalten einer Wabeneinheit durch Brennen des wabengeformten Körpers,

wobei die Zeolithteilchen einen D50 von 3,6 $\mu$m oder mehr aufweisen und eine mittlere Porengröße der Wabeneinheit mehr als oder gleich 0,10 $\mu$m und weniger als oder gleich 0,50 $\mu$m beträgt, eine mittlere Teilchengrößer der Wabeneinheit mehr als oder gleich 3,6 $\mu$m und weniger als oder gleich 7,0 $\mu$m beträgt.

7. Verfahren zum Herstellen einer Wabenstruktur nach Anspruch 6, **dadurch gekennzeichnet, dass** D50 der Zeolithteilchen weniger als oder gleich 7,0 $\mu$m beträgt.

8. Verfahren zum Herstellen einer Wabenstruktur nach einem der Ansprüche 6 oder 7, **dadurch gekennzeichnet, dass** die Zeolithteilchen Ionen-ausgetauscht mit Eisen sind.

9. Verfahren zum Herstellen einer Wabenstruktur nach einem der Ansprüche 6 oder 7, ferner **gekennzeichnet durch** den Schritt von:

   (d) Aussetzen des Zeolith, der in der Wabeneinheit enthalten ist, einem Ionentausch mit Eisen.

10. Verfahren zum Herstellen einer Wabenstruktur nach einem der Ansprüche 6 bis 9, **dadurch gekennzeichnet, dass** die Rohmaterialpaste ferner zumindest anorganische Fasern oder ein organisches Bindemittel aufweist.

11. Verfahren zum Herstellen einer Wabenstruktur nach einem der Ansprüche 6 bis 10, ferner **gekennzeichnet durch** den Schritt von:

   (e) Zusammenfügen mehrerer Wabeneinheiten **durch** Zwischenfügen einer Klebeschicht.

## Revendications

1. Structure en nid d'abeille incluant une unité en nid d'abeille, l'unité en nid d'abeille contenant de la zéolite et un liant inorganique et ayant une pluralité de cellules s'étendant d'une première face d'extrémité à une seconde face d'extrémité de l'unité en nid d'abeille dans une direction longitudinale de celle-ci et séparées par une pluralité de parois cellulaires, **caractérisé en ce que** :

   l'unité en nid d'abeille est fabriquée par moulage et cuisson d'une pâte de matières premières contenant des particules de zéolite et un liant inorganique, les particules de zéolite ayant un D50 de 3,6 $\mu$m ou plus, et une taille moyenne des pores des parois cellulaires est supérieure ou égale à 0,10 $\mu$m et inférieure ou égale à 0,50 $\mu$m, et une taille moyenne des particules des parois cellulaires est supérieure ou égale à 3,6 $\mu$m et inférieure ou égale à 7,0 $\mu$m.

2. Structure en nid d'abeille telle que définie dans la revendication 1, **caractérisée en ce que** le D50 des particules de zéolite est inférieur ou égal à 7,0 $\mu$m.

3. Structure en nid d'abeille telle que définie dans la revendication 1 ou 2, **caractérisée en ce qu'**un rapport de poids de la zéolite contenue dans l'unité en nid d'abeille est supérieur ou égal à 70% en poids.

4. Structure en nid d'abeille telle que définie à l'une des revendications 1 à 3, **caractérisée en ce que** la zéolite subit un échange d'ions avec du fer.

5. Structure en nid d'abeille telle que définie à l'une des revendications 1 à 4, **caractérisée en ce que** la structure en nid d'abeille inclut une pluralité d'unités en nid d'abeille.

6. Procédé de fabrication d'une structure en nid d'abeille incluant une unité en nid d'abeille, l'unité en nid d'abeille contenant de la zéolite et un liant inorganique et ayant une pluralité de cellules s'étendant d'une première face d'extrémité à une seconde face d'extrémité de l'unité en nid d'abeille dans une direction longitudinale de celle-ci et séparées par une pluralité de parois cellulaires, le procédé étant **caractérisé par** les étapes de :

(a) préparer une pâte de matières premières contenant des particules de zéolite et le liant inorganique ;
(b) former un corps moulé en nid d'abeille en moulant la pâte de matières premières ; et
(c) obtenir l'unité en nid d'abeille en cuisant le corps moulé en nid d'abeille,

dans lequel les particules de zéolite ont un D50 de 3,6 $\mu$m ou plus, et une taille moyenne des pores de l'unité en nid d'abeille est supérieure ou égale à 0,10 $\mu$m et inférieure ou égale à 0,50 $\mu$m, une taille moyenne des particules de l'unité en nid d'abeille est supérieure ou égale à 3,6 $\mu$m et inférieure ou égale à 7,0 $\mu$m.

7. Procédé de fabrication d'une structure en nid d'abeille tel que défini dans la revendication 6, **caractérisé en ce que** le D50 des particules de zéolite est inférieur ou égal à 7,0 $\mu$m.

8. Procédé de fabrication d'une structure en nid d'abeille tel que défini à l'une des revendications 6 ou 7, **caractérisé en ce que** les particules de zéolite subissent un échange d'ions avec du fer.

9. Procédé de fabrication d'une structure en nid d'abeille tel que défini à l'une des revendications 6 ou 7, **caractérisé en outre par** l'étape de :

(d) soumettre la zéolite contenue dans l'unité en nid d'abeille à un échange d'ions avec du fer.

10. Procédé de fabrication d'une structure en nid d'abeille tel que défini à l'une des revendications 6 à 9, **caractérisé en ce que** la pâte de matières premières contient, en outre, au moins une fibre inorganique et un liant organique.

11. Procédé de fabrication d'une structure en nid d'abeille tel que défini0 à l'une des revendications 6 à 10, **caractérisé en outre par** l'étape consistant à :

(e) joindre une pluralité d'unités en nid d'abeille en interposant une couche adhésive.

# FIG.1

100

110B

130

115

110A

124

122

# FIG.2

# FIG.3

EP 2 505 249 B1

# FIG.4

START

↓

PREPARE RAW MATERIAL PASTE
CONTAINING ZEOLITE PARTICLES
AND INORGANIC BINDER.
USE ZEOLITE PARTICLES HAVING
D50 OF 3.6 $\mu$m OR MORE — S110

↓

MOLD RAW MATERIAL PASTE INTO
HONEYCOMB MOLDED BODY — S120

↓

OBTAIN HONEYCOMB UNIT BY
FIRING HONEYCOMB MOLDED BODY — S130

↓

END

# FIG.5

**EP 2 505 249 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 09141878 A